Europäisches Patentamt

European Patent Office

Office européen des brevets

(19)

(11) Publication number:

**0 060 062
B1**

(12) # EUROPEAN PATENT SPECIFICATION

(45) Date of publication of patent specification: **20.05.87**

(51) Int. Cl.⁴: **A 23 N 12/08**

(21) Application number: **82301005.3**

(22) Date of filing: **26.02.82**

(54) **A method of and roaster for roasting coffee beans and other material.**

| | |
|---|---|
| (30) Priority: **05.03.81 US 240757**<br>**10.07.81 US 282153** | (73) Proprietor: **Elevitch, Franklin R.**<br>**430, Nevada Avenue**<br>**Palo Alto California 94301 (US)** |
| (43) Date of publication of application:<br>**15.09.82 Bulletin 82/37** | (72) Inventor: **Elevitch, Franklin R.**<br>**430, Nevada Avenue**<br>**Palo Alto California 94301 (US)** |
| (45) Publication of the grant of the patent:<br>**20.05.87 Bulletin 87/21** | |
| | (74) Representative: **Williams, Trevor John et al**<br>**J.A. KEMP & CO. 14 South Square Gray's Inn**<br>**London WC1R 5EU (GB)** |
| (84) Designated Contracting States:<br>**AT DE FR GB SE** | |
| (56) References cited:<br>**DE-A-2 531 390**<br>**DE-B-1 078 805**<br>**DE-C- 129 456**<br>**FR-A-2 338 657**<br>**GB-A- 451 374** | |

Courier Press, Leamington Spa, England.

# Description

Coffee roasters heretofore have been relatively elaborate and have involved a multiplicity of moving parts. A need exists for a simplified coffee roaster which can be employed for domestic use and which will adequately roast coffee beans and which has no moving parts.

Generally speaking, coffee roasters heretofore, including those which are intended for small scale commercial use or for domestic use, have employed active means for tumbling a mass of coffee beans as they are roasted, such tumbling action being intended to promote uniform exposure of the beans to each other, to the walls of the roaster and to hot air. Such roasters required rather elaborate equipment, for example stirrers, rotating drums or spheres, and blowers.

An old roasting implement is described in DE—C—129456 which describes a method of roasting beans which comprises supporting the beans on a substantially horizontal uniformly apertured support member, providing a source of heat from below the support member with a current of air being allowed to pass upwardly through the support member through such layer with a vented cover being provided above the layer. This publication also discloses a roaster for the coffee beans comprising a generally horizontal, apertured support member having an area sufficient to hold a layer of coffee beans to be roasted and an enclosure for such support member provided with a vented cover, heating to take place from below said member. With this prior roaster the enclosure is provided with a handle with the intention that the enclosure should be moved at least periodically above the source of heat for the shaking of coffee beans therein and thus indicates the same need for movement of the coffee beans as used in the roasters provided with tumbling means as discussed above.

Hereinafter coffee roasters and coffee roasting will be referred to. However, the apparatus and method of the invention are also applicable to roasting other seeds and nuts, e.g. sunflower seeds, pumpkin seeds, hazelnuts, almonds, peanuts and cereal grain such as corn and wheat. Nuts may be roasted in the shell where such is practical or the nuts may be shelled.

Generally, in the art as described above, it is believed to be necessary to provide either for manual shaking or other tumbling of the coffee beans during roasting to ensure that they are evenly roast throughout. The present invention appreciates that with proper design it is possible to provide a cheap and economical roaster capable of roasting a small portion of coffee beans without the need for excessively expensive shaking means.

In GB—A—451374 there is disclosed a method of roasting coffee beans as specified in the precharacterising portion of claim 1. However this method is not concerned with the provision of a good usable product but is concerned with obtaining the aroma from roasting beans such that even control of the roasting is not required. The method of the present invention is characterised in heating from said heat source said layer supported by said support member through said perforations via projections that are immediately adjacent said perforations and that project downwardly from said support member with a current of hot air being allowed to pass upwardly through the support member and through the layer. The heating of the support member is facilitated by the projections therefrom projecting downwardly adjacent the apertures.

Accordingly the inventor has appreciated that using a source of radiant heat in the circumstances of there only being a thin layer of beans upon the perforated support the source of radiant heat supplies heat to the beans to be roasted in three ways. It is partly by way of conduction from the heating effect on the supporting perforated member; it is partly caused by contact of hot air with the beans, the hot air itself having simply been heated by the radiant heater and caused by convection to rise up gently through the perforations to contact the beans being roast; and finally by direct impingement of radiant heat upon the material being roast. This direct impingement either occurs through the radiant heat impinging through the apertures on such bean portions as may be above such apertures or, where the apertures are unobstructed by beans, through the apertures to be reflected as radiant heat back down upon the top of the beans to be roasted. With this three way heating the beans are heated evenly without any violent shaking or tumbling although some gentle movement of the beans can take place as a reaction to expansion of gases within the beans during roasting.

The free convection flow of hot gases and the heating of the perforated member is facilitated by the downward projections adjacent the perforations which act as chimneys to facilitate the convective gas flow and as conductive members to transfer heat to the tray bottom.

GB—A—451374 discloses a roaster having the features of the precharacterizing portion of claim 2. As compared therewith the roaster of the invention is characterised in that the support member is surrounded by an integral confining rim and is provided with projections immediately adjacent the perforations and projecting downwardly from said support member.

Because of the fact that the flow of air is unforced, being caused purely by convection, loss of heat is minimised in that the flow of air is kept at just that speed correlated with the rate of production of heat as will provide steady, even and economical heating of the beans being roast.

The holes through the member have downward extensions of the metal of which the tray is made immediately adjacent the perforations. These downward extensions have been found to provide an advantageous effect on the roasting of coffee beans supported by the support member, it is assumed by serving as chimneys and heat conductors to facilitate convective movement of the air up through the perforated support member and through the material being roast.

With the support member being provided as a tray having a perforated bottom portion and a rim surrounding the bottom portion it is possible to have the tray made as a disposable item which can be sold complete with a supply of green coffee beans therein. This provides a particularly convenient marketable commodity in that the user will simply open a packet of beans within the tray with the tray only being used a limited number of times before being disposed of. With such a construction the structure of the tray can be made quite cheaply of aluminium foil with the knowledge that it would be disposed of before it is too far worn or dirtied by the results of roasting of coffee beans therein.

Thus the roaster may be provided as a ready-to-use roaster pack with a supply of green coffee beans provided within a tray formed by the support member, a removable cover being provided for the top and bottom of the tray.

The invention will be further described, by way of example, with reference to the accompanying drawings, in which:

Figure 1 is a perspective view of the coffee roaster tray embodying the invention and intended for domestic use;

Figure 2 shows the roaster of Figure 1 in an oven during the roasting process, the roaster being shown in vertical mid-section;

Figure 3 shows another embodiment adapted for use in the open on top of a hot plate or other open source of heat;

Figure 4 shows a preferred way to package the roaster of Figure 6;

Figure 5 is a section along the line of 12—12 of Figure 4;

Figure 6 shows the roaster of Figure 1 enclosed by a removable cover and with a supply of green coffee beans ready for use; and

Figure 7 shows the manner in which a plurality of the coffee roasters of Figure of Figure 3 may be nested together.

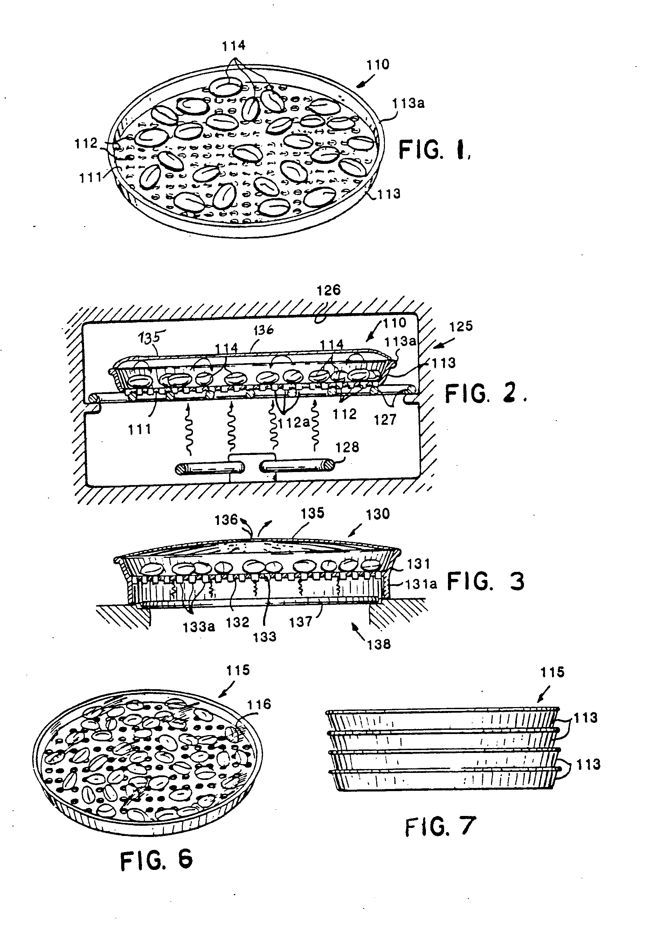

Figures 1 to 7 of the drawings illustrate disposable types of roaster. In Figure 1 a coffee roaster 110 is preferably made of a foil which is sufficiently heavy to allow normal handling, storage and shipment and to allow manipulation by the ultimate user. For example, aluminium foil having a thickness of about 0.09mm may be employed for this purpose. This roaster comprises a bottom portion 111 formed with openings or perforations 112 and a rim 113 completely surrounding the bottom portion 111. Coffee beans are shown at 114 in this roaster. The rim may be formed with a bead 113a.

The perforations 112 may be formed conveniently by piercing from above and leaving downwardly projecting portions of metal 112a. These perforations and downward projections may also be formed by molding. These downward projections aid materially in the roasting process, evidently by acting as heat conductors and/or as chimneys to aid the draught in roasting.

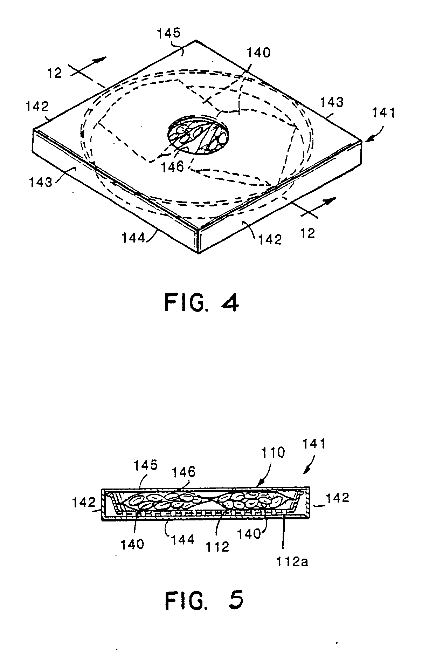

Referring now to Figure 6 this figure shows how the coffee roaster of Figure 1 (likewise that of Figure 3) may be packaged. The package is generally designated by the reference numeral 115, the roaster proper being indicated by the reference numeral 110 in Figure 1. The roaster 110 is completely enclosed in a suitable wrapper 116. This may be, as shown, a transparent wrapper such as cellophane, polyethylene or any transparent film material which is suitable for use in contact with food products. Alternatively, it may be an opaque material such as paper or aluminium foil. An alternative packaging is shown in Figures 4 and 5 and is described below. The beans may be enclosed in a bag as in Figures 4 and 5.

Referring now to Figure 2 an oven 125 has an interior oven cavity 126. Within this cavity there is a support 127 for the roaster 110 and beneath this support are heating coils 128. Hot air rising from the coils 128 ascends through the openings 112 in the bottom 111 of the roaster 110. The coffee beans will first undergo a drying phase and then, when all or most of the moisture has been removed they will tend to pop and jump about. Roasting then takes place. The completion of roasting is indicated when the beans assume a uniformly brown hue. Experience will indicate the hue of brown according to the user's preference.

Referring now to Figure 3, a modified roaster 130 comprises a rim 131 and a bottom portion 132 with openings 133 and it also comprises a downward extension of the rim 131 as shown at 131a. It is also provided with a cover 135 formed with an opening 136. This may form a snap fit with the rim 131 or it may lie loose on it. The roaster 130 is shown sitting on a hot plate 137 of a stove 138. This embodiment with its cover 135 and a lower rim 131a is better suited than the embodiment of Figures 1 and 2 to an open source of heat. The oven 125 in Figure 2 provides an enclosure and a support spaced above the source of heat. The embodiments of Figures 2 and 3 are used, with their cover, in an oven. Downward projections 133a corresponding to projections 112a in Figure 2 are shown.

The perforations 112 in Figure 1 and 133 in Figure 3 are preferably uniformly distributed. The individual perforations are preferably not so small as to impede air flow or so large that the beans fall through. They preferably provide an open area, e.g., about 15 to 75 percent of the total area on the bottom of the tray, sufficient to bring about rapid roasting. The rim is preferably greater than the average diameter of the coffee beans. A rim 113 or 131 typically extends 1.9cms above the bottom 111 or 132 of the tray.

Referring now to Figures 4 and 5 the roaster of Figures 1 and 2 is shown within which are one or more packages 140 of coffee beans each constituting a suitable portion of coffee. The bag material may be cellophane, polyethylene or other suitable film material and it may be printed with advertising material or instructions. The roaster and bags of coffee beans are enclosed in a paper board box 141 having side walls 142, end walls 143, a bottom 144 and a top 145. The top has a hole 146 formed in it for viewing the contents which may be covered, if desired, with a clear plastics sheet (not shown). One or both ends 143 may be hinged with a tab to fit in the box for enclosure during shipment and storage and which can be pulled out for access.

Referring again to the Figures in their entirety, the perforations 112 and 133 are illustrative. Different patterns may be used, e.g., spiral, concentric circles, straight lines of perforations on staggered centres, etc. Further, the roaster body need not be circular; it may be angular. The perforations may be provided by cells as in an egg crate type of structure. The perforations may be round or angular and if angular, they may be square, triangular or pentagonal.

Various materials of construction may be used. If the roaster is intended for sustained re-use, it will be made of sturdier, e.g., thicker, material. If it is intended for a single use of a few uses, it may be made of lighter, e.g., thinner, material. Aluminium is the preferred material as it is widely and economically available in an assortment of thicknesses; is resistant to heat and oxidation; is nontoxic and acceptable as a packaging agent and as a utensil in contact with food; and is attractive in appearance. However, other materials, e.g., copper or stainless steel, may be used, also ceramic material, organic polymers such as those including polytetrafluoroethylene which are suitable for cooking utensils and glass.

The perforations 112 and 133 in Figures 2 and 3 are described above as being formed by punching or piercing a solid sheet of metal, i.e., the bottom of the tray. However, the tray bottom may be formed otherwise, e.g., by molding, or by coiling a strip of metal, e.g., a strip of aluminium, into the shape of a spiral in which case the spaces between the turns of the coil will serve as the openings or perforations and will function like the holes 112 and 133 and the vertical strips will serve as the downward projections 112a and 133a. Also a network of separate pieces may be assembled, such as in an egg crate type of structure and the openings or cells formed by such a structure will perform the function of the holes 112 and 133 and the material separating the open spaces or cells will perform the function of the projections 112a and 133a.

The roaster of Figure 1 may be used on an open source of heat such as the hot plate of Figure 3 by providing it with a bottom support to keep the bottom 111 out of direct contact with the source of heat and with a cover having an opening.

While various sources of heat may be provided, for example, the roaster may be placed over an electric heating coil of a kitchen stove, the source of heat may be an integral part of the roaster, for example, a heating coil may be fixed to the housing of the roaster (but be separable for cleaning, replacement or repair).

In operation, coffee beans as shown are placed on the perforated bottom portion 111. A thin layer is employed. After the cover has been put in place, the roaster is heated by being placed over a source of radiant heat. Air is heated to pass upwardly from the coil by convection, as shown by the wavy arrows in Figures 2 and 3 and through the perforations in the plate, and hence through the coffee beans, effectively heating them and causing roasting. Heat is radiated back onto the beans by the cover. Opening 136 (or a multiplicity of smaller openings) in Figure 8 allows rapid venting of water vapor, other gases and smoke. Green coffee beans have about 12 to 20 percent moisture content which is driven off by heat together with other gases and smoke. It is important that such gases (including water vapor) and smoke be vented rapidly; otherwise roasting does not occur as desired. It is also important that heat be reflected back, principally by radiation, from the cover.

Several features of the construction combine to achieve rapid and uniform heating and roasting of the beans. Heat is conveyed by convection owing to the passage of hot air through the perforations. Heat also is applied by radiation from the heat source and by reflection of heat from the cover. At the level of the coffee beans heat is also applied by conduction through the material of the perforated bottom and heat is also applied by conduction from the wall of the roaster tray to beans around the perimeter of the mass of beans.

Further the beans, as they are roasted, move due to the conversion of liquid moisture into vapor. Such motion of the beans, together with the sources of heat as described above, have the effect of heating and roasting the beans uniformly such that heating, drying and roasting taking place more rapidly in some areas than in others is minimized.

The beans undergo change in two stages. In the first stage the beans are dried by the evaporation of moisture, which is carried away by the current of hot air. The second stage is roasting of the dried beans. This occurs when moisture is driven out and the temperature of the beans rises above the boiling point of water. This stage is marked by a change of colour from green to various shades of brown. In prior US—A—3,964,175, a mass of coffee beans is described as being levitated by hot air being blown through a mass of beans. In the present roaster the flow of air is gentle and no significant levitation occurs. Motion of the beans is slight and is due mainly if not entirely, to evaporation of moisture and expansion of the vapor. The beans move about but are not levitated.

As stated above the beans change in colour from green to a shade or shades of brown. A temperature of about 218°C to 246°C for about 10 to 20 minutes has been found to be suitable. Experience will suffice to determine, by observation, when the desired degree of roasting is complete, e.g. light, French, etc. It is also desirable to bring the beans quickly to and above their isothermal point, i.e., the point at which moisture begins to boil off. The beans may be allowed to cool in the roaster.

Preferably, however, the beans are poured out to cool outside the roaster, after which they may be stored and ground as desired. Also, while green beans have been referred to above, partially or wholly dehydrated beans may be roasted. The use of dehydrated beans will accelerate roasting because the time needed for removing moisture from green beans will be saved.

## Claims

1. A method of roasting beans, seeds, nuts or similar material which comprises supporting such material (114) in the form of a thin layer on a substantially horizontal uniformly perforated support member (111, 132), providing a source (128, 137) of radiant heat from below the support member (111, 132), a vented cover (135) being provided above the layer to reflect back radiant heat down upon the layer, characterised in heating from said heat source (128, 137) said layer supported by said support member (111, 132) through said perforations (112, 133) via projections (112a, 133a) that are immediately adjacent said perforations and that project downwardly from said support member (111, 132) with a current of hot air being allowed to pass upwardly through the support member (111, 132) and through the layer.

2. A roaster for coffee beans and other similar material comprising a horizontal, perforated support member (111, 132) having an area sufficient to hold a layer of coffee beans (114) or other similar material to be roasted, a shallow rim (113, 131) supporting a vented cover (135) having a reflecting inner surface to reflect back down upon the layer radiant heat which is passed through said support member (111, 132) and through the layer supported thereon, characterised in that the support member (111, 132) is surrounded by an integral confining rim (113, 131) and is provided with projections (112a, 133a) immediately adjacent the perforations (112, 133) and projecting downwardly from said support member (111, 132).

3. A roaster as claimed in claim 2, characterised in that the support member (111, 132) is formed as a tray (110) made of aluminium foil.

4. A roaster as claimed in claim 2 or 3, characterised in that the cover (135) fits the top of the support member and is provided with a central opening (136).

5. A roaster as claimed in claim 2, 3 or 4, characterised in that it is in the form of a ready-to-use roaster pack with a supply of green coffee beans (140) provided within a tray (110) formed by the support member, a removable cover (145) being provided for the top and bottom of the tray.

6. A roaster as claimed in claim 5, characterised in that the supply of green coffee beans (140) is enclosed in one or more bags.

7. A roaster pack as claimed in claim 5 or 6, characterised in that the removable cover is in the form of a box (141) enclosing the tray.

## Patentansprüche

1. Verfahren zum Rösten von Kaffeee, Samen, Nüssen oder ähnlicher Produkte, wobei man das Produkt (114) in Form einer dünnen Schicht auf einem im wesentlichen horizontal angeordneten, gleichförmig perforierten Trageteil (111, 132) trägt, eine Quelle (128, 137) für Strahlungswärme unterhalb des trageteils (111, 132) vorsieht, eine belüftete Haube (135) über der Schicht anordnet, um Strahlungswärme nach unten auf die Schicht zurückzustrahlen, dadurch gekennzeichnet, daß man die auf dem Trageteil (111, 132) getragene Schicht von der Wärmequelle aus durch die Perforationen (112, 133) über Vorsprünge (112a, 133a) aufheizt, die direkt bei den Perforationen angeordnet sind und vom Trageteil (111, 132) nach unten ragen, wobei man einen Strom heißer Luft nach oben durch das Trageteil (111, 132) und durch die Schicht streichen läßt.

2. Vorrichtung zum Rösten von Kaffeebohnen oder dergleichen Produkte, umfassend ein horizontales, perforiertes Trageteil (111, 132) mit einer Fläche, die ausreicht, um eine Schicht von Kaffeebohnen (114) oder dergleichen zu röstendem Produkt zu halten, einen flachen Rand (113, 131), der eine belüftete Haube (135) mit einer reflektierenden inneren Fläche trägt, um Strahlungshitze nach unten auf die Schicht zu reflektieren, wobei die Strahlungshitze durch das Trageteil (111, 132) und durch die darauf ge-tragene Schicht hindurchgelangt, dadurch ge-kennzeichnet, daß das Trageteil (111, 132) von einem einstückigen Begrenzungsrand (113, 131) umgeben und mit Vorsprüngen (112a, 132a) direkt bei den Perforationen (112, 133) versehen ist, die vom Trageteil (111, 132) nach unten hervorstehen.

3. Vorrichtung nach Anspruch 2, dadurch gekennzeichnet, daß das Trageteil (111, 132) als Schale (110) ausgebildet ist, die aus Aluminiumfolie hergestellt ist.

4. Vorrichtung nach einem der Ansprüche 2 oder 3, dadurch gekennzeichnet, daß die Haube (135) auf das Oberteil des Trageteils paßt und mit einer zentralen Öffnung (136) versehen ist.

5. Vorrichtung nach einem der Ansprüche 2, 3 oder 4, dadurch gekennzeichnet, daß sie in Form einer gebrauchsfertigen Rösterpackung ausgebildet ist, mit einem Vorrat grüner Kaffeebohnen (140), die in der durch das Trageteil gebildeten Schale (110) vorgesehen sind, wobei eine abnehmbare Haube (145) für die Oberseite und den Boden der Schale vorgesehen ist.

6. Vorrichtung nach Anspruch 5, dadurch gekennzeichnet, daß der Vorrat von grünen Kaffeebohnen (140) in einem oder mehreren Beuteln eingeschlossen ist.

7. Rösterpackung nach einem der Ansprüche 5 oder 6, dadurch gekennzeichnet, daß die abnehmbare Haube in Form einer Schachtel (141) vorgesehen ist, welche die Schale einschließt.

## Revendications

1. Procédé de torréfaction de fèves, de graines, de noix ou de produits similaires, consistant à supporter ledit produit (114) sous la forme d'une mince couche sur un élément de support (111, 132) perforé de façon uniforme et sensiblement horizontal, à disposer une source (128, 137) de chaleur radiante en dessous de l'élément de support (111, 132), un couvercle ajouré (135) étant prévu au-dessus de la couche pour réfléchir la chaleur radiante vers le bas sur la couche, caractérisé en ce qu'on chauffe à partir de ladite source de chaleur (128, 137) ladite couche supportée par ledit élément de support (111, 132) au travers desdites perforations (112, 133), par l'intermédiaire de saillies (112a, 133a) qui sont immédiatement adjacentes auxdites perforations et qui font saillie vers le bas à partir dudit élément de support (111, 132), un courant d'air chaud étant autorisé à passer vers le haut à travers l'élément de support (111, 132) et à travers la couche.

2. Torréfacteur pour grains de café et autres produits similaires, comprenant un élément de support (111, 132) perforé et horizontal, dont la surface est suffisante pour supporter une couche de grains de café (114) ou autre produit similaire à torréfier, un rebord peu profond (113, 131) supportant un couvercle ajouré (135) comportant une surface interne réfléchissante pour réfléchir vers le bas et sur la couche la chaleur radiante qui a traversé ledit élément de support (111, 132) et à travers la couche supportée par ce dernier, caractérisé en ce que l'élément de support (111, 132) est entouré par un pourtour de retenue d'un seul tenant (113, 131) et est muni de saillies (112a, 133a) immédiatement adjacentes aux perforations (112, 133) et faisant saillie vers le bas à partir dudit élément de support (111, 132).

3. Torréfacteur selon la revendication 2, caractérisé en ce que l'élément de support (111, 132) est constitué sous forme d'un plateau (110) réalisé par une feuille d'aluminium.

4. Torréfacteur selon la revendication 2 ou 3, caractérisé en ce que le couvercle (132) se fixe sur la partie supérieure de l'élément de support et est muni d'une ouverture centrale (136).

5. Torréfacteur selon la revendication 2, 3 ou 4, caractérisé en ce qu'il se présente sous la forme d'un torréfacteur empaqueté prêt à l'emploi comprenant une certaine quantité de grains de café vert (140) disposée à l'intérieur d'un plateau (110) constitué par l'élément de support, un couvercle amovible (145) étant prévu pour la partie supérieure et la partie inférieure du plateau.

6. Torréfacteur selon la revendication 5, caractérisé en ce que la quantité de grains de café vert (140) est enfermée dans un ou plusieurs sacs.

7. Torréfacteur selon la revendication 5 ou 6, caractérisé en ce que le couvercle amovible est sous la forme d'une boîte (141) enfermant le plateau.

FIG. 1.

FIG. 2.

FIG. 3

FIG. 6

FIG. 7

1

FIG. 4

FIG. 5